# EUROPEAN PATENT APPLICATION

(11) **EP 3 079 049 A2**
(43) Date of publication of application: **12.10.2016**
(21) Application number: 16163654.3
(22) Date of filing: 04.04.2016
(51) Int. Cl.: G06F 3/0483, G06F 3/0485

(54) **CONTENT DISPLAY DEVICE, CONTENT DISPLAY PROGRAM, AND CONTENT DISPLAY METHOD**

(30) Priority: 07.04.2015 JP 2015078693
(71) Applicant: Media DO Co., Ltd, Tokyo 151-0053 (JP)
(72) Inventor: FUJITA, Yasushi, Tokyo, 151-0053 (JP)
(74) Representative: dompatent von Kreisler Selting Werner - Partnerschaft von Patent- und Rechtsanwälten mbB

(57) **Abstract**

To provide a content display device capable of more flexibly displaying content having a plurality of pages, a content display device which displays content having a plurality of pages includes a content data storage unit which retains data about the content, a page data temporary storage unit which temporarily retains page data included in the content, page data managing means which manages the page data retained in the page data temporary storage unit, input accepting means which accepts any of vertical and horizontal page navigation instructions from a user, and page display means which displays a page based on the page data retained in the page data temporary storage unit.

## Description

### TECHNICAL FIELD OF THE INVENTION

The present invention relates to content display devices, display programs, and display methods and, in more detail, to a display device, display program, and display method for content having a plurality of pages such as an electronic book.

### BACKGROUND OF THE INVENTION

Conventionally, with proliferation of various terminal devices such as computers, portable telephones, smartphones, and tablet computers, techniques for displaying various content using these terminal devices have been utilized.

In recent years, various books such as novels, comics, and magazines have been provided as electronic books in a viewable manner by terminal devices as mentioned above.

In particular, many smartphones, tablet computers, part of computers, terminals dedicated for reading electronic books, and so forth have a touch panel where inputs can be provided by a user touching a display device with his or her finger. In these terminal devices, it is often the case that by a motion as if turning pages of a book, content with a plurality of pages such as an electronic book can be viewed.

In many cases, data about the content is retained in an auxiliary storage device included in the terminal device or an external storage device connected via a network or any of various input/output means. These auxiliary storage device and external storage device often have a relatively slow data input/output speed. Therefore, if a structure is adopted in which a page to be displayed is obtained from the auxiliary storage device/external storage device every time a page navigation instruction is issued from the user, the processing time from a time when the user issues an instruction to a time when the page is actually displayed is long, making it difficult for the user to comfortably view the electronic book.

To get around this problem, in a general content display device, data about each page included in the content is read in advance, and this page data is developed on a main storage device included in the content display device. In general, the main storage device has extremely high data input/output speed, compared with the auxiliary storage device and the external storage device. Therefore, if the page data is developed in advance on the main storage device, the processing time required from a time when the user issues an instruction to a time when a destination page is actually displayed is short, allowing the user to comfortably view the content.

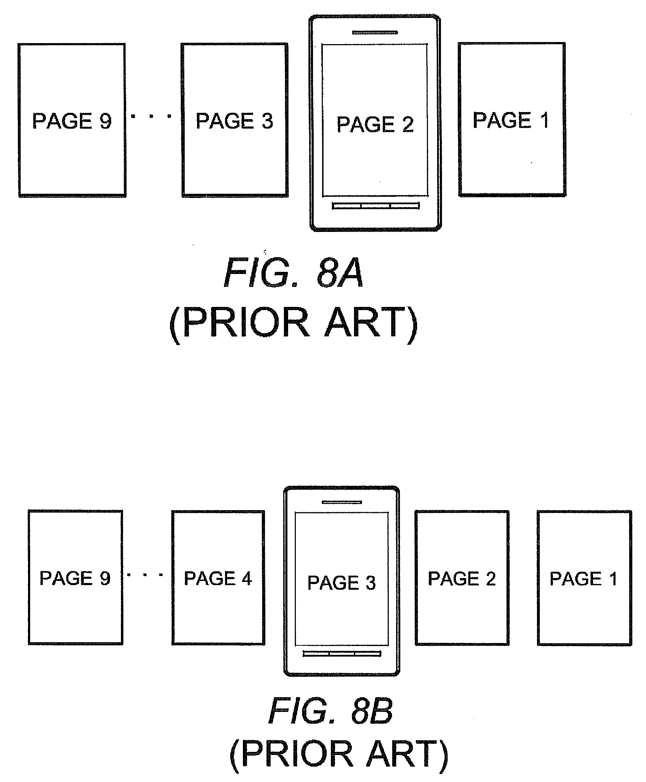

FIG. 8A and FIG. 8B are pattern diagrams of a case in which, as an example of a method of displaying content having a plurality of pages by a content display device using a terminal device having a touch panel, content of nine pages in total for left-to-right page turning is displayed. As described above, data about each page included in the content obtained from the auxiliary storage device (or external storage device) is developed in advance on the main storage device.

FIG. 8A depicts a case in which, after all pieces of page data is developed on the main storage device, the second page is displayed on an electronic book display device. Here, the page data about pages other than the second page, which is actually being displayed, is developed on the main storage device.

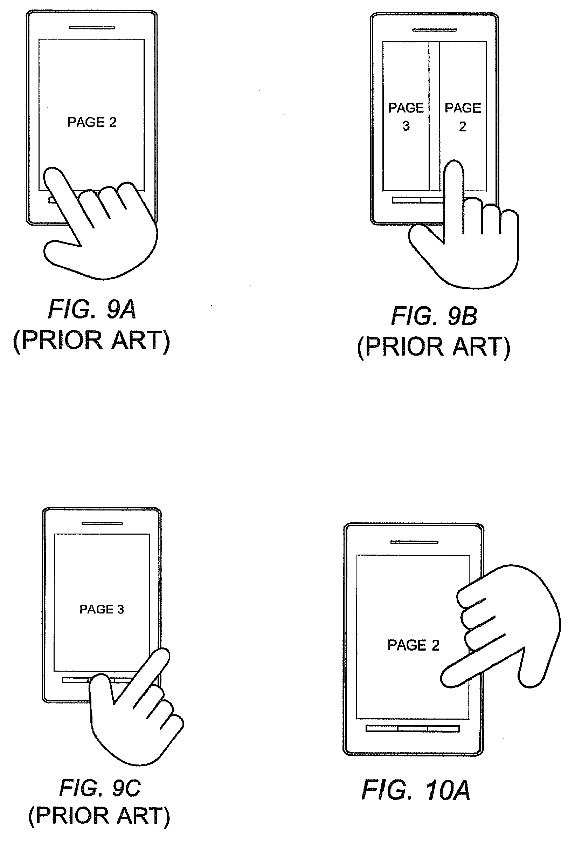

In this state, when the user desires to move to the next page (the third page), the user performs operation as depicted in FIG. 9A to FIG. 9C. First, as depicted in FIG. 9A, the user touches a left portion on the touch panel, where the second page is displayed, with his or her finger.

Then, as depicted in FIG. 9B, as touching the touch panel with the finger, the user moves the finger to the right along the screen. Then, the display of the second page on the touch panel follows the movement of the finger to move to the right, and display of the third page appears from the left on the touch panel device.

Subsequently, by moving the finger to the right on the touch panel as flicking, the third page is displayed on the touch panel, as depicted in FIG. 9C. In this manner, an input method of touching the touch panel with a finger and then flicking to a specific direction is generally called a flick input. As exemplarily depicted in FIG. 9A to FIG. 9C, an input by a motion of flicking from left to right is called a rightward flick input and, conversely, an input by a motion of flicking from right to left is called a leftward flick input. Similarly, an input by a motion of flicking from below to above is called an upward flick input and, conversely, an input by a motion of flicking from above to below is called a downward flick input.

As another method of inputting a page navigation instruction in the content display device, tap inputs may be often used, in which the user lightly touches the touch panel with a finger and then immediately moves the finger off the touch panel. For example, a page navigation instruction can be provided by a tap input on a portion near a left edge of a page displayed on the touch panel to move to a page on the left. Similarly, a page navigation instruction can be provided by a tap input on a portion near any of right, upper and lower edges of the page displayed on the touch panel to move to a page in a relevant direction.

FIG. 8B depicts a case in which the third page is displayed on the content display device after a right flick input depicted in FIG. 9A to FIG. 9C. Here, while the displayed page is changed from the state in FIG. 8A to the third page, all pages are read and retained onto the main storage device.

Here, description has been exemplarily made to the operation in which the user provides a rightward flick input to cause a page next to the page currently being displayed to be displayed. When the user provides a leftward flick input, a page previous to the page currently being displayed is displayed by similar process. Also, while description has been made to the case of the content for left-to-right page turning, content for right-to-left page turning can also be implemented by displaying the next page by a leftward flick input and the previous page by a rightward flick input.

In this manner, the technique of shortening the time required from a time when the user issues a page navigation instruction to a time when a page is actually displayed by developing all pages included in the content on the main storage device has been generally used.

Many techniques for handling content such as an electronic book in a manner closer to handling an actual book have been disclosed. For example, Japanese National Publication of International Patent Application No. 2012-514811 discloses a technique in which, in place of page translation operation as depicted in FIG. 9A to FIG. 9C, display as if turning a paper sheet is performed and the back side of the turned page is displayed, thereby allowing display closer to the case of turning a page of an actual book to be provided to the user.

Japanese Unexamined Patent Application Publication No. 2013-196313 discloses a technique of displaying an image of an edge portion of an electronic book together with the content of the electronic book and providing means which performs continuous page tuning by operation such as shifting a finger as touching the edge portion or tilting the terminal device, thereby allowing operation similar to operation on an actual book.

### SUMMARY OF THE INVENTION

As described above, many techniques have been disclosed for the purpose of handling content having a plurality of pages such as an electronic book in a manner similar to handling a paper medium such as an actual book. On the other hand, in other operations by a terminal device such as a computer, a smartphone, and a tablet computer for use as a content display device, for example, in viewing of an HTML file by web browser software and viewing of e-mails by an electronic mail client, a method of viewing while vertically scrolling the screen is common, and therefore its operation direction is different from the operation direction of horizontally turning pages.

Moreover, there are various types of contents such as novels, comics, and magazines, and display for left-to-right page turning may be preferable for some contents, display for right-to-left page turning may be preferable for some, and continuous vertical display may be preferable for others. Furthermore, in consideration of personal preferences of each user using the content display device, the most preferable direction of tuning pages in content display cannot be generalized.

Therefore, the present invention is to provide a content display device capable of more flexibly displaying content having a plurality of pages.

To solve the above problem, a content display device according to the present invention is directed to a content display device using a smartphone or a tablet computer and displaying content having a plurality of successive pages, and the content display device includes:
a content data storage unit which retains content data;
a page data temporary storage unit which temporarily retains page data included in the content;
page data managing means which manages the page data retained in the page data temporary storage unit;
input accepting means which accepts any of vertical and horizontal page navigation instructions from a user; and
page display means which displays a page including progress of page navigation based on the page data retained in the page data temporary storage unit.

In this manner, based on the navigation instruction from the user, vertical and horizontal navigation through the pages can be performed. Therefore, a flexible content display method in accordance with the content to be displayed and user's preferences can be provided to the user.

According to a preferable mode of the present invention, the page data temporary storage unit retains a first page data array including data of a displayable page including progress of the page navigation when a page being displayed by the page display means is horizontally moved, first position data indicating a position of the page currently being displayed by the page display means in the first page data array, a second page data array including data of a displayable page including progress of the page navigation when a page being displayed by the page display means is vertically moved, and second position data indicating a position of the page currently being displayed by the page display means in the second page data array,
the first page data array and the second page data array include same page data, and
based on the page navigation instruction, the page data managing means performs update so that the first position data and the second position data indicate page data of same substance.

With this structure, the amount of page data retained in the page data temporary storage unit can be decreased while a page data read wait state is avoided. Therefore, the content display device according to the present invention can be achieved even in a terminal device with a small-capacity main storage device or the like for use as the page data temporary storage unit.

According to a preferable mode of the present invention, the page navigation instruction includes vertical and horizontal flick inputs by the user.

With this structure, the user can input a page navigation instruction by intuitive operation.

According to a preferable mode of the present invention, the page navigation instruction includes a tap input by the user to a portion near any of upper, lower, left and right edges of the page being displayed by the page display means.

With this structure, a page navigation instruction can be easily inputted by the user with less operation.

According to a preferable mode of the present invention, the content is an electronic book.

In this manner, by using the content display device according to the present invention as viewing means for electronic books in various formats, such as left-to-right page turning, right-to-left page turning, vertical writing, horizontal writing, and so forth, the characteristic of the content display device according to the present invention can be more effectively utilized.

According to a preferable mode of the present invention, the page data is image data.

As for the image data, the page data can be read quickly, compared with vector data and so forth. Therefore, the characteristic of the content display device according to the present invention can be more effectively utilized.

An operation method for a content display device according to the present invention is directed to
an operation method for a content display device using a smartphone or a tablet computer and including a content data storage unit which retains content data having a plurality of successive pages, a page data temporary storage unit which temporarily retains page data included in the content, input accepting means, page data managing means, and page display means, the method including the steps of:
by the page data managing means, obtaining the page data from the content data retained in the content data storage unit and recording, on the page data temporary storage unit, a first page data array including data of a displayable page including progress of navigation when a page being displayed by the page display means is horizontally moved and a second page data array including data of a displayable page including progress of navigation when the page being displayed by the page display means is vertically moved, the first page data array and the second page data array having same page data, together with first position data in the first page data array and second position data in the second page data array indicating page data of same substance;
by the input accepting means, accepting vertical and horizontal page navigation instructions from a user;
by the page display means, displaying a page including the progress of the page navigation based on the page data retained in the page data temporary storage unit;
by the page data managing means, updating one of the first position data and the second position data based on the page navigation instruction; and
by the page data managing means, updating another one thereof so that the first position data and the second position data indicate same page data.

A content display program according to the present invention is directed to
content display program for displaying content having a plurality of successive pages, the program causing a smartphone or a tablet computer to function as:
a content data storage unit which retains content data;
a page data temporary storage unit which temporarily retains page data included in the content;
page data managing means which manages the page data retained in the page data temporary storage unit;
input accepting means which accepts any of vertical and horizontal page navigation instructions from a user; and
page display means which displays a page including progress of page navigation based on the page data retained in the page data temporary storage unit, wherein
the page data temporary storage unit retains a first page data array including data of a displayable page including progress of the page navigation when a page being displayed by the page display means is horizontally moved, first position data indicating a position of the page currently being displayed by the page display means in the first page data array, a second page data array including data of a displayable page including progress of the page navigation when a page being displayed by the page display means is vertically moved, and second position data indicating a position of the page currently being displayed by the page display means in the second page data array,
the first page data array and the second page data array include same page data, and
based on the page navigation instruction, the page data managing means performs update so that the first position data and the second position data indicate page data of same substance.

According to the invention, a flexible content display method capable of vertical and horizontal page navigation can be provided.

### BRIEF DESCRIPTION OF THE DRAWINGS

FIG. 1 is a functional block diagram of a content display device according to the present invention;
FIG. 2 is a pattern diagram of an example of content display by the content display device according to the present invention;
FIG. 3 is a pattern diagram of an example of content display by the content display device according to the present invention;
FIG. 4 is a flowchart of content display process by the content display device according to the present invention;
FIG. 5 is a flowchart of initial page display process by the content display device according to the present invention;
FIG. 6A and FIG. 6B are flowcharts of page display process after page navigation by the content display device according to the present invention;
FIG. 7 is a pattern diagram of an example of content display by the content display device according to the present invention;
FIG. 8A and FIG. 8B are pattern diagrams of a conventional content display device;
FIG. 9A to FIG. 9C are pattern diagrams of input/display operation for horizontal page navigation in the content display device; and
FIG. 10A to FIG. 10C are pattern diagrams of input/display operation for vertical page navigation in the content display device;

### DESCRIPTION OF THE PREFERRED EMBODIMENTS

An embodiment of the present invention is described with reference to the drawings.

The present embodiment relates to a content display device which displays content having a plurality of pages such as an electronic book, a program which causes a computer device to function as the content display device, and a content display method by the content display device. More specifically, the present embodiment relates to a content display device, program, and display method allowing content viewing when a user performs horizontal page turning and vertical page turning and even when the user performs horizontal and vertical page turning in a combined manner.

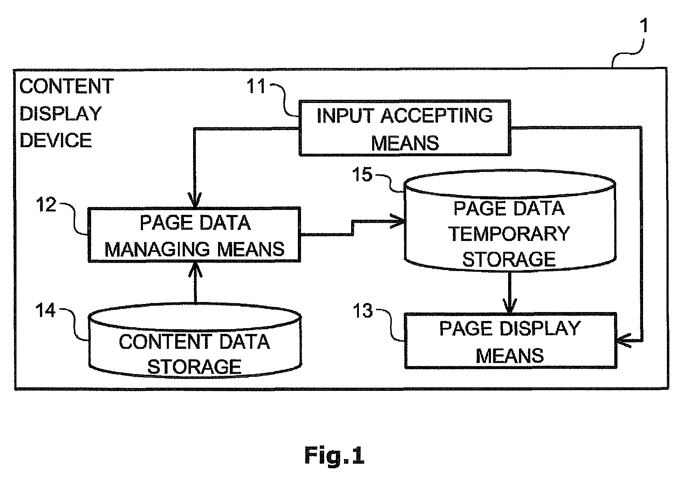

As depicted in a functional block diagram of FIG. 1, a content display device 1 according to the present invention includes a content data storage unit 14 which retains content data to be displayed, a page data temporary storage unit 15 which temporarily retains data about pages included in the content when content display is performed, input accepting means 11 which accepts an input such as any of vertical and horizontal page navigation instructions from the user, page data managing means 12 which records the data about pages included in the content on the page data temporary storage unit for management, and page display means 13 which viewably displays the pages.

As the content display device 1, a computer device such as a desktop/notebook personal computer, a smartphone, or a tablet computer is used, the computer device including an arithmetic operation device such as a CPU (Central Processing Unit); a main storage device such as a RAM (Random Access Memory); an auxiliary storage device such as a HDD (Hard Disc Drive), SSD (Solid State Drive), or flash memory; an output device such as a liquid-crystal display, organic EL display, or electronic paper; and an input device such as a touch panel, button, and/or keyboard. More specifically, a program for content display is recorded on the auxiliary storage device of the computer device, and is developed as required on the main storage device for process by the arithmetic operation device. Also, a terminal device dedicated for content display and configured similarly to the above-described computer may be used as the content display device 1.

Also, the content display device 1 may be configured to include means which obtains content from other storage device, such as an external storage device communicable via a network such as the Internet or LAN (Local Area Network) or by using a serial bus standard such as USB (Universal Serial Bus), or a removable external storage device such as an SD card.

The content display program is preferably provided as an application program running on an OS (Operating System) which runs on various computer devices as described above. For example, when a portable terminal device such as a smartphone or tablet computer is used, the content display program according to the present embodiment can be provided as an application program which runs on the OS such as iOS of Apple (registered trademark) Inc. or Android (registered trademark) of Goggle (registered trademark) Inc., and is run on the OS, thereby allowing the computer device to be used as a content display device.

In the present embodiment, the input accepting means 11 uses a touch panel. As a method of accepting an input from the user, a flick input is used, in which the user touches the touch panel device with his or her finger and moves the finger in a specific direction as flicking, as depicted in FIG. 9A to FIG. 9C. For example, an input by touching the touch panel with the finger and moving the finger rightward as flicking is called a rightward flick input. Similarly, an input by touching the touch panel with the finger and moving the finger leftward as flicking is called a leftward flick input, an input by touching the touch panel with the finger and moving the finger upward as flicking is called an upward flick input, and an input by touching the touch panel with the finger and moving the finger downward as flicking is called a downward flick input. A flick input in any direction of upward, downward, leftward, and rightward is received from the user, and is used as a content page navigation by the user.

Also, another input method may be used. For example, a structure may be adopted in which a tap input of lightly touching the touch panel with a finger and then immediately moving the finger off the touch panel is received at a portion near any of upper, lower, left, and right ends of the touch panel, thereby accepting the input as an input of a page navigation instruction in a relevant direction or a swipe input of touching the touch panel with a finger and then moving the finger in any direction is accepted as an input of a page navigation instruction.

Furthermore, another structure may be adopted in which, by using a computer device including an input device such as a button and keyboard other than the touch panel, an input from the button and/or the keyboard may be accepted as a page navigation instruction.

In the present embodiment, the content data storage unit 14 is achieved by using an auxiliary storage device. For example, in the auxiliary storage device, data about a plurality of pages included in each content is stored in any format, such as, for example, epub format, which is widely used as a file format for electronic books and so forth; PDF format, which is widely used as a file format for electronic documents; or a collection of image files in formats such as jpeg and png formats. In addition to or in place of the auxiliary storage device, an external storage device as described above may be used as the content data storage unit 14.

The page data temporary storage unit 15 is achieved by using a main storage device. The main storage device such as a RAM included in the computer device is capable of input and output at extremely high speed compared with the auxiliary storage device and the external storage device. Therefore, at the time of content display, the page data managing means 12 is used to record the page data included in the content from the content data storage unit 14 onto the page data temporary storage unit 15, thereby allowing the page display means 13 to obtain a page to be displayed at high speed.

As the page display means 13, a display device is used, such as a liquid-crystal display device, organic EL display device, or electronic paper device. As described above, a touch panel usable as the input accepting means 11 is preferably provided.

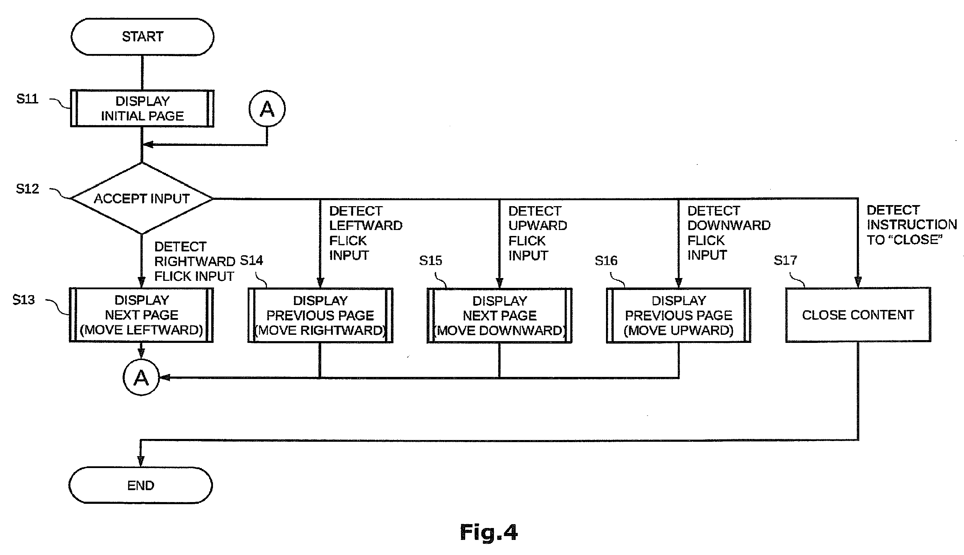

Next, with reference to a flowchart depicted in FIG. 4, content display by the content display device 1 and page navigation process based on a user instruction are described.

After content to be displayed is specified by any method such as accepting a selection from the user, an initial page is displayed first at step S11. Here, the initial page specified by any method is displayed. For example, the first page of the content may be always displayed or, if the content has been displayed before, the last displayed page may be displayed.

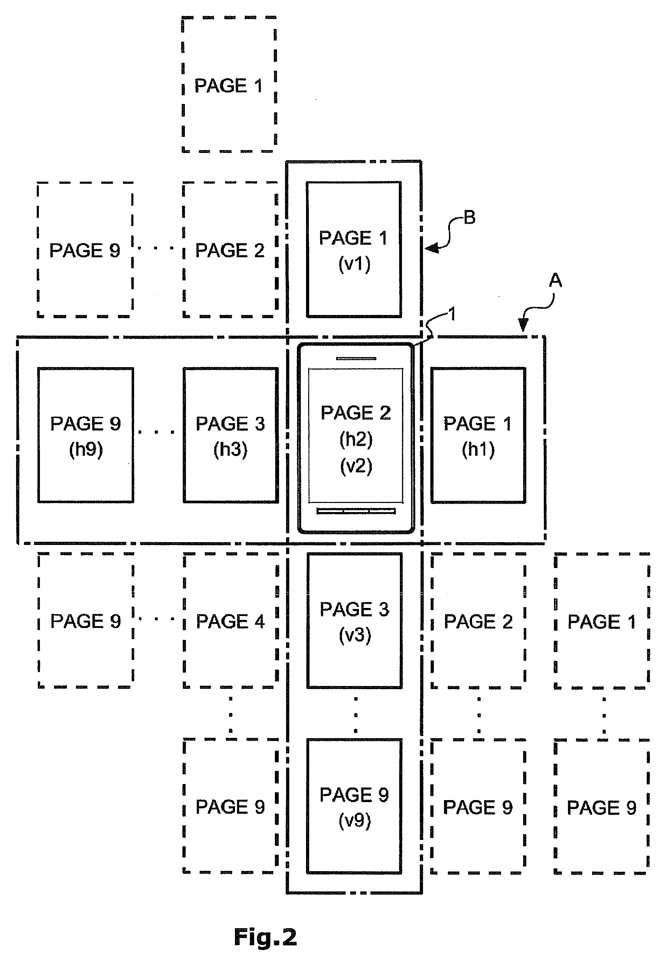

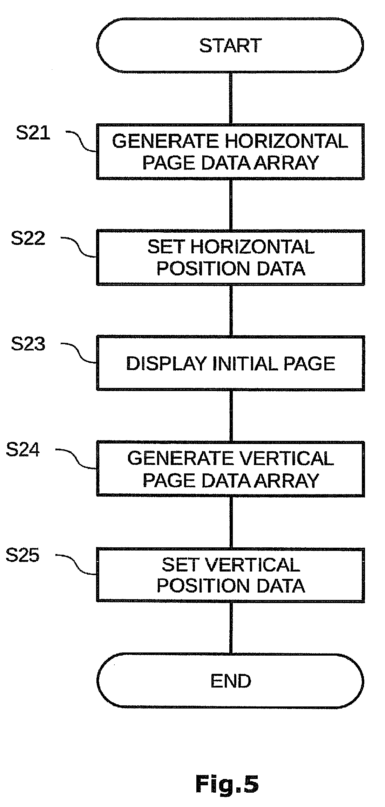

FIG. 5 is a flowchart of initial page display process. With reference to this flowchart, display process is described for content having nine pages in total for left-to-right page turning as exemplarily depicted in FIG. 2, with the second page taken as an initial page.

First, at step S21, a horizontal page data array for use in display at the time of navigation through the pages included in the content in a horizontal direction is generated by the page data managing means 12, and is recorded on the page data temporary storage unit 15. In this process, array of page data included in a region A indicated by a one-dot-chain line depicted in FIG. 2 is generated and recorded on the page data temporary storage unit 15. A more specific example can be achieved by generating an array of page data including nine pages in total and setting a horizontal direction as a scroll direction. Here, for ease of description, the pieces of page data included in the horizontal page data array are referred to as h1, h2, ..., h9, respectively, sequentially from the first page.

Then, at step S22, data about the position of the initial page in the horizontal page data array generated at step S21 is set and recorded on the page data temporary storage unit 15. In the example depicted in FIG. 2, since the second page is set as the initial page, h2 is set as horizontal position data.

At step S23, from the horizontal page data array generated at step S21, page data is obtained, that is, page data indicated as h2 in FIG. 2, based on the horizontal position data set at step S22, and is displayed by the page display means 13.

Then, in the content display device 1 according to the present invention, in order to allow vertical page navigation in addition to horizontal page navigation, a vertical page data array for use in display at the time of vertically navigation though the pages included in the content in a vertical direction, such as page data included in a region B indicated by a two-dot-chain line in FIG. 2, is generated and recorded on the page data temporary storage unit 15 at step S24. A more specific example can be achieved by generating an array of page data about nine pages in total and setting a vertical direction as a scroll direction. Here, for ease of description, the pieces of page data included in the vertical page data array are referred to as v1, v2, ..., v9, respectively, sequentially from the first page.

At step S25, data about the position of a page to be initially displayed in the vertical page data array generated at step S24 is set and recorded on the page data temporary storage unit 15. In the example depicted in FIG. 2, since the second page is set as the initial page, v2 is set as vertical position data.

Consider a state in which pages to be displayed are disposed in a matrix as depicted in FIG. 2. In this case, data (region A) about all pages included in a row including the page being displayed (second page) and data (region B) about all pages included in a column including the page being displayed (second page) are read onto the page data temporary storage unit 15.

As described above, in the present embodiment, described is a device, program, and method capable of displaying content irrespectively of whether the user performs page-turning operation in the horizontal or vertical directions. That is, the horizontal page data array generated at step S21 and the vertical page data array generated at step S24 are such that the scroll directions are set as horizontal and vertical directions for an array including the same page data. That is, h1 and v1, h2 and v2, ..., and h9 and v9 each indicate page data of the same substance.

With this, irrespectively of whether the user issues a horizontal page navigation instruction or a vertical page navigation instruction by using the input accepting means 11, the page data of navigation destination can be obtained from the page data temporary storage unit 15, thereby allowing the page of navigation destination to be displayed quickly.

Also, as described above, when the content display program according to the present embodiment is provided as an application program which runs on the OS of the computer device, generation of page data arrays with their scroll directions set as horizontal and vertical directions, respectively, can be achieved by using a reusable program group, such as a framework or API (Application Programming Interface) provided by each OS vendor such as Apple Inc., Google Inc., or other developers. That is, in various OSes, in order to reduce load on the respective application developers in implementation of screen display, it is often the case that a framework, API, or the like is provided capable of implementing a display screen by an application by generating an array including data about a plurality of pages and specifying its scroll direction. By using this, two arrays including the same page data are generated, and horizontal and vertical scroll directions are set for these arrays, thereby allowing generation of a page data array for use in horizontal page turning and a page data array for use in vertical page turning.

If other pages indicated by broken lines in FIG. 2 are read in advance to the page data temporary storage unit 15, each page can be displayed quickly even if the user sequentially issues a combination of horizontal and vertical page navigation instructions. However, for this structure, the page data temporary storage unit 15 has to be extremely large capacity, that is, a large-capacity main storage device is required. Moreover, in practice, a movable range by vertical and horizontal navigations spreads infinitely, and therefore it is substantially impossible to read all pieces of page data included in that range in advance.

For this reason, in the structure of the present embodiment, as described above, only the pieces of page data belonging to the row and column including the page being displayed are read in advance. With this, while the use capacity of the page data temporary storage unit 15 is decreased, page display after vertical or horizontal navigation can be performed quickly.

After the initial page is displayed at step S11, a page navigation instruction from the user is accepted at step S12. As described above, in the present embodiment, a page navigation instruction from the user by a flick input in a specific direction is accepted.

Here, when a rightward flick input is detected, the process proceeds to step S13, and the next page in horizontal navigation is displayed.

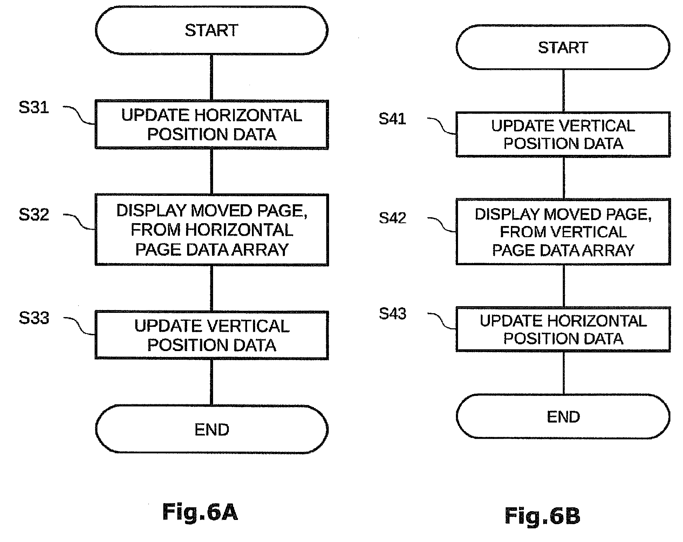

FIG. 6A is a flowchart of page display process after horizontal page navigation. With reference to this flowchart, for the content for left-to-right page turning as depicted in FIG. 2, description is made to process in which, with the second page being displayed as an initial page, the third page (h3) positioned on the left of the page currently being displayed is displayed when a rightward flick input is received.

First, at step S31, process of updating horizontal position data is performed. Here, since a rightward flick input is received in the state in which the second page is being displayed, the horizontal position data is updated to proceed one page forward, that is, h3 positioned leftward in FIG. 2. Then at step S32, with reference to the updated horizontal position data (h3) from the horizontal page data array, display by the page display means 13 is performed.

While the page after navigation is displayed by the process at steps S31 and S32, the position data in the vertical page data array is still v2, causing a variance in the data about the page being displayed between the horizontal and vertical directions. Thus, at step S33, the vertical position data is also updated to proceed one page forward, that is, v3 positioned downward in FIG. 2.

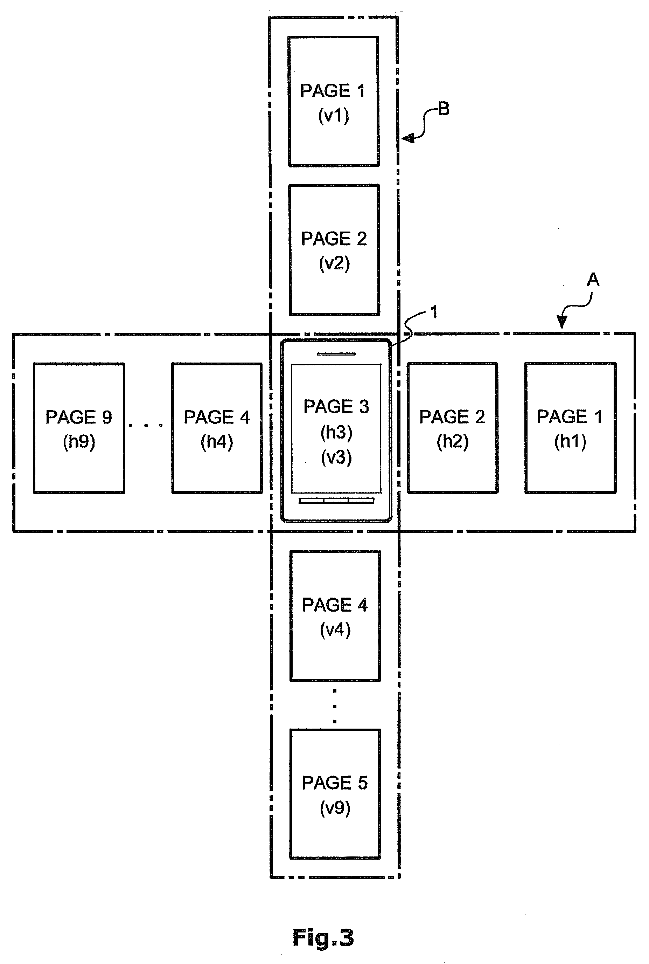

With the above-described process, as depicted in a pattern diagram of FIG. 3, the page being displayed is changed to the third page, thereby making the horizontal page data array and the vertical page data array consistent.

In this manner, with display page navigation, by updating the position data about the page currently being displayed in each of the horizontal and vertical page data arrays retained in the page data temporary storage unit 15, the use region on the page data temporary storage unit 15 can be reduced to have double the number of pages of the content to be displayed.

After the page navigation process at step S13 ends, the process returns to step S12, again accepting an input of a page navigation instruction from the user.

When a leftward flick input is detected at step S12, the process proceeds to step S14, moving the page being displayed in a direction reverse to that of the process at step S13. Then, by following the process depicted in FIG. 6A, the pieces of position data in the horizontal and vertical page data arrays retained in the page data temporary storage unit 15 are updated, and the process again returns to step S12.

When an upward flick input is detected at step S12, the process proceeds to step S15, performing process of displaying the next page in vertical navigation.

FIG. 6B is a flowchart of page display process after vertical page navigation. With reference to this flowchart, for the content for left-to-right page turning as depicted in FIG. 2, description is made to process in which, with the second page being displayed as an initial page, the third page (v3) positioned on the lower side of the page currently being displayed is displayed when an upward flick input is received.

First, at step S41, process of updating vertical position data is performed. Here, since an upward flick input is received in the state in which the second page is being displayed, the vertical position data is updated to proceed one page forward, that is, v3 positioned downward in FIG. 2. Then at step S42, with reference to the updated vertical position data (v3) from the vertical page data array, display by the page display means 13 is performed.

While the page after navigation is displayed by the process at steps S41 and S42, the position data in the horizontal page data array is still h2, causing a variance in the data about the page being displayed between the horizontal and vertical directions. Thus, at step S43, the horizontal position data is also updated to proceed one page forward, that is, h3 positioned leftward in FIG. 2.

With the above-described process, as depicted in the pattern diagram of FIG. 3, the third page is being displayed, similarly to the case after horizontal page navigation by a right flick described above.

After the page navigation process at step S13 ends, the process returns to step S12, again accepting an input of a page navigation instruction from the user.

When an upward flick input is detected at step S12, the process proceeds to step S16, moving the page being displayed in a direction reverse to that of the process at step S15. Then, by following the process depicted in FIG. 6B, the pieces of position data in the horizontal and vertical page data arrays retained in the page data temporary storage unit 15 are updated, and the process again returns to step S12.

In this manner, also for vertical navigation, as with horizontal navigation, the process of displaying a page after navigation and the process of updating the position data about the page currently being displayed in each of the horizontal and vertical page data arrays retained in the page data temporary storage unit 15.

Also, as for the page navigation process by the content display device 1 according to the present invention, as described by using FIG. 9A to FIG. 9C, display with pages being switched with progress is preferable. In an example of display, when page navigation from the second page to the third page by a rightward flick input is accepted, as depicted in FIG. 9A to FIG. 9C, the right end of the second page moves off the screen to the right of the content display device 1 in accordance with the flick input motion, and the right end of the third page as a navigation destination starts to be displayed from outside the screen on the left. To achieve this, a structure can be adopted in which the page data that is present in the navigation direction is set so as to be referable before update of the horizontal position data is established and, when the flick input motion is stopped, such as when the finger is moved off before the flick input motion is completed or when the finger moving direction is changed in midstream, page movement and update of the horizontal and vertical position data are not performed.

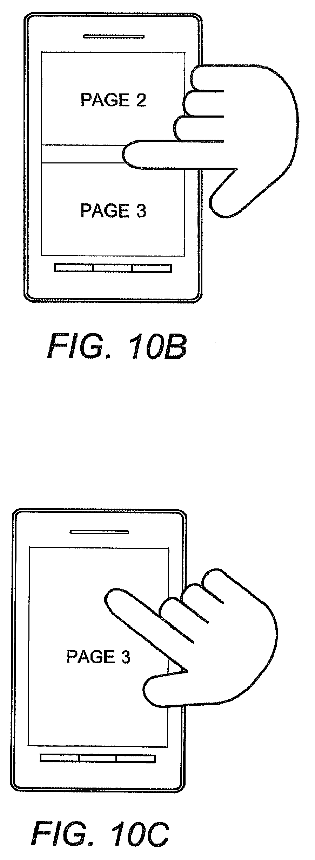

The same goes for vertical page navigation. For example, when page navigation from the second page to the third page by an upward flick input is accepted, as depicted in FIG. 10A to FIG. 10C, the upper end of the second page moves off the screen to the upper side of the content display device 1 in accordance with the flick input motion, and the upper end of the third page as a navigation destination starts to be displayed from outside the screen on the lower side. To achieve this, a structure can be adopted in which the page data that is present in the navigation direction is set so as to be referable before update of the vertical position data is established and, when the flick input motion is stopped, such as when the finger is moved off before the flick input motion is completed or when the finger moving direction is changed in midstream, page movement and update of the horizontal and vertical position data are not performed.

In this manner, when the structure of displaying the progress of horizontal and vertical page turning is adopted, the input can be appropriately fed back to the user. In particular, the user can correctly recognize an erroneous operation as follows. That is, since the content display device 1 according to the present invention allows vertical navigation in addition to horizontal navigation, the user makes a motion intended for a horizontal flick input, but the motion may be erroneously detected as a vertical flick input because of inadequacy in user input motion, erroneous detection by the input accepting means 11, or the like.

Also, in the present embodiment, in the example of display of the progress of page turning, the page being displayed is scrolled off the screen and the page as a navigation destination appears from outside the screen by scrolling, as depicted in FIG. 9A to FIG. 9C and FIG. 10A to FIG. 10C. However, the present invention is not restricted to this example. For example, the progress of page turning can be displayed to the user by any of various methods, such as display with animation as if turning paper sheets.

In both of horizontal page navigation and vertical page navigation, it is preferable to adopt a structure in which, with the first page or the last page in the content being displayed, when a page navigation instruction in a direction from the first page to the previous page or from the last page to the next page is inputted, the user is notified by any method, such as animation display or character display, that no page is present as a navigation destination, and then the process returns to step S12 to again accept a page navigation instruction from the user.

Then, when the user provides an input for closing the content being displayed by any operation determined in advance at step S12, the process proceeds to step S17, closing the content being displayed and ending content display by the content display device 1.

As described above, two page data arrays, that is, the horizontal page data array and the vertical page data array, are generated in advance and recorded on the page data temporary storage unit 15. Based on an input of a page navigation instruction from the user, the position data about the page being displayed in the horizontal page data array and the position data about the page being displayed in the vertical page data array are updated while consistency therebetween is kept, thereby achieving high-speed page navigation process while reducing the use capacity of the page data temporary storage unit 15.

In the present embodiment, after the process of displaying the initial page at step S11 ends, the process proceeds to step S12 to accept an input of a page navigation instruction. However, another structure may be adopted in which an interrupt input of a page navigation instruction can be accepted concurrently with the process of displaying the initial page at step S11. When an interrupt input of a page navigation instruction is accepted, the page navigation process is performed concurrently with the process of generating horizontal and vertical page data arrays in the process of displaying the initial page.

If this structure is adopted, the user can sequentially navigate through the pages even if the time elapsed before the user performs next-page navigation operation is shorter than the processing time until the operation of updating the page data retained in the page data temporary storage unit 15 is completed. Here, even if the process of generating the horizontal and/or vertical page data arrays is not completed, the process of updating the position data in horizontal and vertical page data arrays is performed, thereby allowing page display at the time of completion of generation of each page data array, with consistency between the horizontal position data and the vertical position data being kept.

Also, for ease of description, the structure is adopted herein in which the operation of generating the horizontal and vertical page data arrays and setting position data at steps S21, S22, S24, and S25 in FIG. 5 are sequentially performed for the process in the horizontal direction and the process in the vertical direction. However, the process of generating the horizontal and vertical page data arrays and the process of setting position data are not restrictively performed in this sequence.

For example, if the structure is adopted in which, as described above, an interrupt input of a page navigation instruction can be accepted if data about a page adjacent to the page to be displayed is read with priority, display of the adjacent page can be performed quickly.

Furthermore, in the initial page display process, generation of a vertical page data array (step S24) and setting of position data (step S25) may be performed first, and an initial page may be specified from the vertical page data array for display. Alternatively, the process of generating a horizontal page data array and the process of generating a vertical page data array may be concurrently performed, or only the initial page may be read with priority.

In the present embodiment as depicted in FIG. 2 and FIG. 3, the structure is adopted in which the page data arrays including all pieces of page data in the row and column including the page being displayed are retained in the page data temporary storage unit 15. Alternatively, page data arrays including only any number of pages may be retained in the page data temporary storage unit 15.

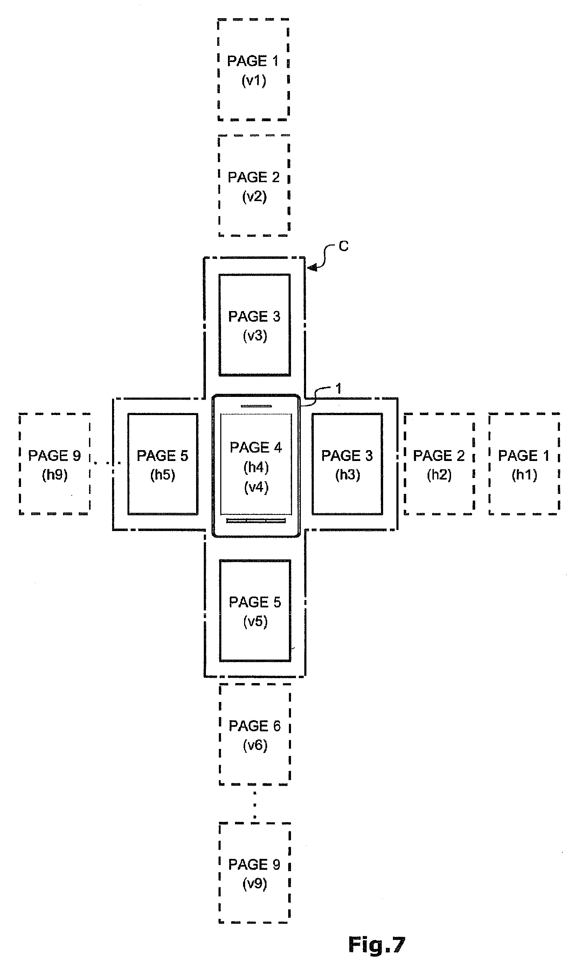

For example, a structure may be adopted in which only page data in a region C indicated by a one-dot-chain line in FIG. 7, that is, page data about each page vertically and horizontally adjacent to the page being displayed, is retained in the page data temporary storage unit 15. In this structure, in the page navigation process at steps S13 to S16, in addition to update of position data in each of the horizontal and vertical page data arrays, a process of updating the page data itself included in each page array is required. Nevertheless, the use capacity of the page data temporary storage unit 15 can be further decreased. This is effective particularly for, by way of example, content having a large number of pages and requiring a large capacity to develop all pieces of page data to the page data temporary storage unit 15.

In this manner, by restricting the amount of page data to be retained in the page data temporary storage unit 15, adjustment can be performed in consideration of various factors, such as the processing capability of the arithmetic operation device of the content display device 1, the capacity of the main storage device, the input/output speed of the auxiliary storage device, and the total number of pages of the content to be displayed.

Still further, a structure can be adopted in which the amount of page data to be retained in the page data temporary storage unit 15 can be set by the user. In this structure, settings in accordance with the way of use of each user can be performed.

Each page in the content to be displayed by the content display device 1 have any data, for example, image data, character data, vector data, and combinations of data in these various formats. When data is in a format in which the data cannot be outputted as it is from the output device as an image, such as character data and vector data, it is preferable to perform conversion process when horizontal and vertical page data arrays are generated by the page data managing means 12 and record the result as an image on the page data temporary storage unit 15. In this manner, if a structure is adopted in which the image after conversion is retained in the page data temporary storage unit 15, the process of displaying, by the page display means 13, the page data retained in the page data temporary storage unit 15 can be performed quickly.

However, each page in the content is preferably image data. In this structure, the image data can be recorded on the page data temporary storage unit 15 without performing the above-described conversion process, and high-speed operation can be expected.

## Claims

1. A content display device using a smartphone or a tablet computer and displaying content having a plurality of successive pages, the content display device comprising:
a content data storage unit which retains content data;
a page data temporary storage unit which temporarily retains page data included in the content;
page data managing means which manages the page data retained in the page data temporary storage unit;
input accepting means which accepts any of vertical and horizontal page navigation instructions from a user; and
page display means which displays a page including progress of page navigation based on the page data retained in the page data temporary storage unit, wherein
the page data temporary storage unit retains a first page data array including data of a displayable page including progress of the page navigation when a page being displayed by the page display means is horizontally moved, first position data indicating a position of the page currently being displayed by the page display means in the first page data array, a second page data array including data of a displayable page including progress of the page navigation when a page being displayed by the page display means is vertically moved, and second position data indicating a position of the page currently being displayed by the page display means in the second page data array,
the first page data array and the second page data array include same page data, and
based on the page navigation instruction, the page data managing means performs update so that the first position data and the second position data indicate page data of same substance.

2. The content display device according to claim 1, wherein
the page navigation instruction includes vertical and horizontal flick inputs by the user.

3. The content display device according to claim 1 or 2, wherein
the page navigation instruction includes a tap input by the user to a portion near any of upper, lower, left and right edges of the page being displayed by the page display means.

4. The content display device according to any of claims 1 to 3, wherein
the content is an electronic book.

5. The content display device according to any of claims 1 to 4, wherein
the page data is image .data.

6. An operation method for a content display device using a smartphone or a tablet computer and including a content data storage unit which retains content data having a plurality of successive pages, a page data temporary storage unit which temporarily retains page data included in the content, input accepting means, page data managing means, and page display means, the method comprising the steps of:
by the page data managing means, obtaining the page data from the content data retained in the content data storage unit and recording, on the page data temporary storage unit, a first page data array including data of a displayable page including progress of navigation when a page being displayed by the page display means is horizontally moved and a second page data array including data of a displayable page including progress of navigation when the page being displayed by the page display means is vertically moved, the first page data array and the second page data array having same page data, together with first position data in the first page data array and second position data in the second page data array indicating page data of same substance;
by the input accepting means, accepting vertical and horizontal page navigation instructions from a user;
by the page display means, displaying a page including the progress of the page navigation based on the page data retained in the page data temporary storage unit;
by the page data managing means, updating one of the first position data and the second position data based on the page navigation instruction; and
by the page data managing means, updating another one thereof so that the first position data and the second position data indicate same page data.

7. A content display program for displaying content having a plurality of successive pages, the program causing a smartphone or a tablet computer - to function as:
a content data storage unit which retains content data;
a page data temporary storage unit which temporarily retains page data included in the content;
page data managing means which manages the page data retained in the page data temporary storage unit;
input accepting means which accepts any of vertical and horizontal page navigation instructions from a user; and
page display means which displays a page including progress of page navigation based on the page data retained in the page data temporary storage unit, wherein
the page data temporary storage unit retains a first page data array including data of a displayable page including progress of the page navigation when a page being displayed by the page display means is horizontally moved, first position data indicating a position of the page currently being displayed by the page display means in the first page data array, a second page data array including data of a displayable page including progress of the page navigation when a page being displayed by the page display means is vertically moved, and second position data indicating a position of the page currently being displayed by the page display means in the second page data array,
the first page data array and the second page data array include same page data, and
based on the page navigation instruction, the page data managing means performs update so that the first position data and the second position data indicate page data of same substance.
